Europäisches Patentamt

European Patent Office

Office européen des brevets

(11) Publication number : **0 482 850 A2**

# (12) EUROPEAN PATENT APPLICATION

(21) Application number : **91309679.8**

(22) Date of filing : **18.10.91**

(51) Int. Cl.⁵ : **G05D 23/00, B41F 17/00**

(30) Priority : **20.10.90 KR 1677490**

(43) Date of publication of application :
**29.04.92 Bulletin 92/18**

(84) Designated Contracting States :
**DE FR GB IT**

(71) Applicant : **GOLD STAR CO. LTD**
**20 Yoido-Dong, Youngdungpo-ku**
**Seoul (KR)**

(72) Inventor : **Jung, Yong Kyu**
**524 dong - 403ho, Jamsil - 5danji APT.**
**Songpa-ku, Seoul (KR)**

(74) Representative : **Wood, Anthony Charles et al**
**Urquhart-Dykes & Lord 91 Wimpole Street**
**London W1M 8AH (GB)**

(54) **TPH temperature control apparatus.**

(57) A temperature detector (21) detects the temperature of a thermal print head (13), and control means (14-18) controls heat release by said head to allow heat release to continue if the detected temperature is below a predetermined value and to discontinue heat release for a predetermined time period if the temperature is above a predetermined value. The temperature is detected for each line printed by the head, whereby to permit improvement in the uniformity and optical quality of the colour printing.

F I G. 2

EP 0 482 850 A2

## Field of the invention

The present invention relates to a TPH (thermal print head) temperature control apparatus for a color printer, and particularly to an apparatus and a method by which the heat generated from the TPH can be efficiently controlled during a continuous operation of a color printer.

## Description of the prior art

All kinds of colors in general are combinations of three basic colors such as red, green and blue. However, color printing operations are carried out in such a manner that three colors such as yellow, mag enta and cyan are graduated into proper optical concentrations (usually 64 to 256 scales), and the differences between the optical concentrations are printed by utilizing the heat generated by the TPH.

That is, if a color picture containing a natural scene is to be printed, then the picture has to be resolved into a plurality of lines, with each line consisting of proper amount of pixels. Then a primary printing is carried out in such a manner that yellow color is printed line by line based on the optical density of yellow color for each pixel by using a thermal transcribing apparatus and a paper. Then a secondary printing is carried out in such a manner that mag enta color is printed line by line based on the optical density for each of the pixels. Then a tertiary printing is carried out on the same sheet in such a manner that cyan color is printed line by line based on the optical density for each of the pixels, thereby completing a picture of natural scene.

In other words, the color printing operation is carried out in such a manner that a thermal transcribing apparatus is applied to a dye sheet with yellow, magnenta and cyan colors dyed thereon, so that different optical concentraions should be printed overlappingly in accordance with the heat releasing time. For example, gray color is formed by printing combined colors overlappingly in the ratio of yellow: 10, magnenta: 20, cyan: 30.

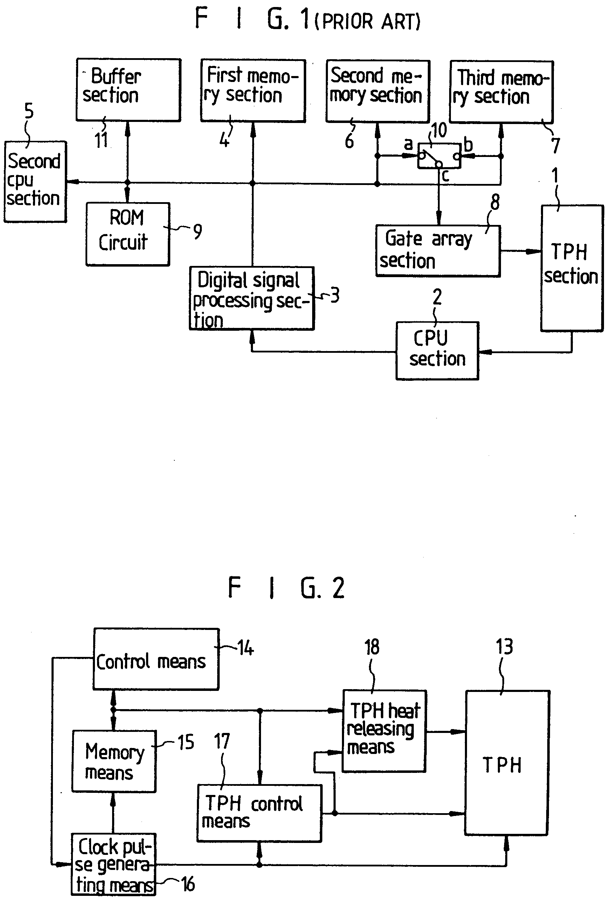

Figure 1 is a block diagram showing the constitution of the conventional TPH temperature control apparatus in which the printing contents are printed on a recording paper by utilizing the heat release of a thermal print head which is a thermal transcribing apparatus. As shown in the drawing, this apparatus includes: a first CPU section 2 for outputting control signals after detecting the temperature of the TPH section 1, and after converting the detected signals into digital signals; a digital signal processing section 3 for carrying out digital processing after receipt of the output signals of the first CPU section 2; a first memory section 4 for storing the digital processed signals; a second CPU section 5 for controlling signals after receipt of the image signals of a ROM circuit 9 and after receipt of the output signals of the first memory section 4; a second memory section 6 and a third memory section 7 for alternately storing the control signals of the second CPU section 5; a gate array section 8 for supplying the control signals of the second and third memory sections 6,7 to the TPH section 1; a switching section 10 for sequentially supplying the output signals of the second and third memory sections 6,7 to the gate array section 8; and a buffer section 11 connected to the second CPU section 5 in such a manner as to hold all the control signals representing the current print status.

The conventional TPH temperature control apparatus constituted as above is operated in the manner described below.

If the color printer starts the operation, the TPH 1 releases heat, and the first CPU section 2 performs A/D conversions by detecting the temperature in accordance with the heat release each time a page is completed, and also generates TPH control sinals correspondingly with the temperature detections. The controlled temperature detection signals are promptly subjected to digital processing by the DPS section 3, before being stored into the first memory section 4. The second CPU section 5 receives simultaneously the digital processed signals of the first memory section 4 and the image data of the ROM circuit 9, and stores the output signals alternately into the second memory section 6 and the third memory section 7 upon encountering a condition for heating the TPH 1.

The gate array section 8 receives alternately the parallel output signals of the second and third memory sections 6,7, and supplies serialized TPH control signals to the TPH 1. Under this condition, the switching section 10 transfers the output signals of the second and third memory sections 6,7 one by one to the gate array section 8. The reason for using the two memory sections is that the TPH control signals are stored into the second and third memory sections in advance in order to reduce the time delay for the TPH control signals outputted from the gate array section 8 as far as possible.

Meanwhile, the buffer section 11 which is connected to the second CPU section 5 memorizes the signals for the current print status, the time for the end of the print, the status of the dye sheet and the like. Thus the TPH control circuit effects heat generation and heat generation termination upon completing one page in accordance with the temperature detection signals outputted by the TPH 1, thereby controlling the temperature of the TPH.

However, this conventional TPH temperature control apparatus has various problems as described below.

First, the control is carried out by detecting the temperature for each page, and therefore, the heat sensitive optical concentration can not be efficiently controlled, with the result that the first and end portions of even one page show different optical concentrations. Particularly, when a plurality of pages are printed for the same picture contents, the difference of the optical concetrations becomes severe within the same page.

Second, the system requires speedy transmissions of data, and therefore, the DSP circuit and the memory sections have to be provided, thereby complicating the circuit of the apparatus.

## Summary of the invention

The present invention is intended to overcome the above described disadvantages of the conventional technique.

Therefore it is the object of the present invention to provide a TPH temperature control apparatus in which the accumulated heat formed during a color printing is detected, and the TPH temperature is effectively controlled based on the detected signals, thereby making it possible to perform prints in proper and precise colors.

In achieving the above object, the apparatus of the present invention includes: a TPH (thermal transcribing) means for performing thermal printings in accordance with the inputted control signals; a control means for outputting control signals in order to operate a heat releasing time control circuit and the peripheral circuits in accordance with the signals detected by the TPH means; a clock pulse generating means for supplying control signals to the peripheral circuits in accordance with the inputted control signals; a memory means for storing the picture data from the control means, and for outputting output signals in accordance with the control signals of the clock pulse generating means; a TPH control means for outputting temperature control signals in accordance with the control signals of the clock pulse generating means; and a TPH heat releasing means for supplying heat release signals to the TPH means by comparing the picture data signals and the heat release time control signals with the temperature control signals respectively.

## Brief description of the drawings

The above object and other advantages of the present invention will become more apparent by describing in detail the preferred embodiment of the present invention with reference to the attached drawings in which:

Figure 1 is a block diagram showing the constitution of the conventional TPH temperature control apparatus;

Figure 2 is a block diagram showing the constitution of the TPH temperature control apparatus according to the present invention;

Figure 3 is a block diagram showing the constitution of another embodiment of the TPH temperature control apparatus according to the present invention;

Figure 4 is a graphical illustration showing the heat releasing status of the TPH; and

Figure 5 is a timing chart for an embodiment of the present invention.

## Description of the preferred embodiment

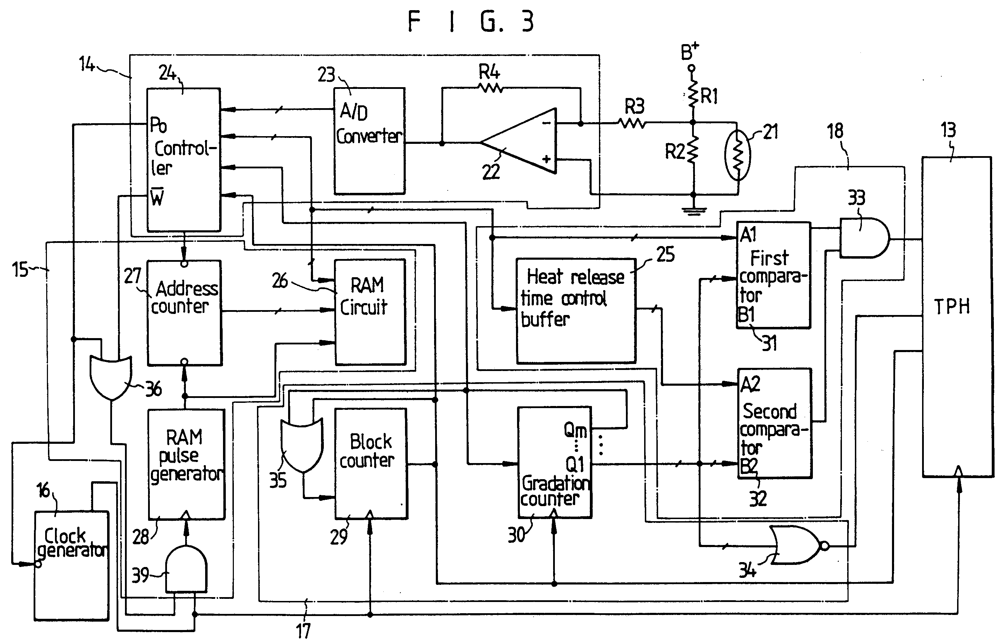

The apparatus of the present invention will be described in detail referring to Figures 2 to 5.

Figure 2 is a block diagram showing the constitution of the TPH temperature control apparatus according to the present invention. As shown in this drawing, the apparatus includes: a TPH 13 for releasing heat in order to carry out printings, and for detecting the temperature; a control means 14 consisting of an OP amplifier 22, an A/D converter 23 and a controller 24, and for controlling the output of the image source after receipt of temperature detection signals detected by the TPH 13; a clock pulse generating means 16 for being driven by the output signals of the control means 14, and for supplying clock signals to the TPH 13; a memory means 15 consisting of a RAM circuit 26, an address counter 27, a RAM pulse generator 28, an OR gate 36 and an AND gate 37, and for outputting image source data after receipt of picture data from the control means 14 and the output of the clock pulse generating means 16 in accordance with its output; a TPH control means 17 consisting of a block counter 29, a gradation counter 30 and an OR gate 34, and for inputting the current gradation status to the controller 24 after receipt of the output signal of the clock pulse generating means 16 in accordance with its output, as well as inputting control signals to the TPH 13; and a TPH heat releasing means 18 consisting of a heat release time control buffer 25, first and second comparators 31,32 and an AND gate 33, and for outputting heat releasing time by comparing the gradation output signals of the TPH control means 17 with the inputted image source data of the memory means 15 and the inputted heat releasing time value of the TPH control means 14.

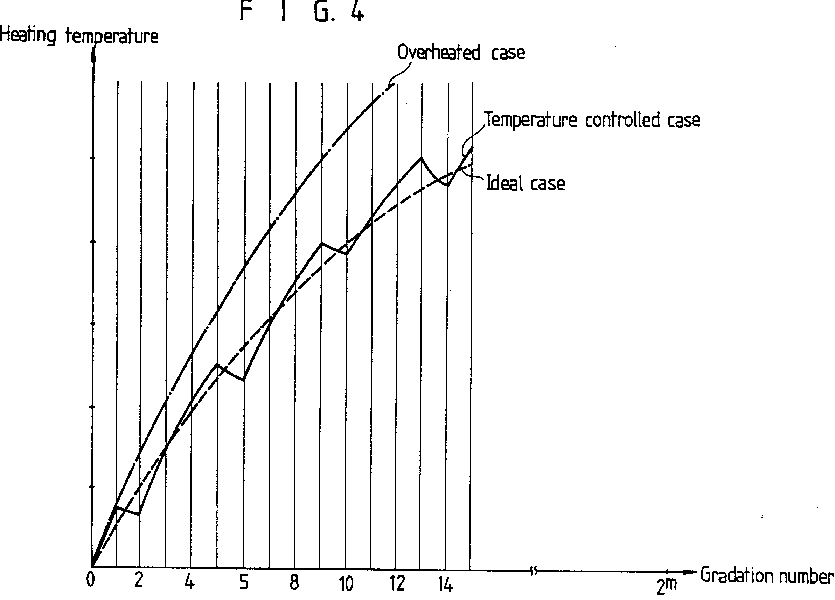

Now the present invention will be described in further detail referring to Figure 3. The TPH 13 will be over-heated after a continuous printing operation of the color printer, and a temperature detector consisting of resistors R1-R3 and a thermister 21 will detect the temperature of the TPH 13. Usually, the temperature detector is attached on the tip of the TPH 13. The temperature detection signals are inputted into the OP amplifier 22 to step up the voltage variation of the thermister 21 to a proper level, and then, the signals are converted from analogue signals to digital signals.

The controller 24 supplies a clock pulse to the clock pulse generating means 16 to drive it in accordance with the output of the A/D converter 23, and the controller 24 stores the image data into the RAM circuit 26 in a sequential manner. Under this condition, the temperature detection is carried out for each line, and the image data are stored into the RAM circuit 26 line by line. Under this condition, the address counter 27 outputs address signals so that the addresses of the image data of the RAM circuit 26 should be sequentially outputted. A RAM pulse generator 28 supplies a clock pulse to the address counter 27 to drive it, and also supplies a read/write pulse to the RAM circuit 26 in accordance with the output of the clock pulse generating means 16.

Under this condition, if the RAM circuit 26 is performing a reading operation , a high signal is outputted to an output terminal Pφ of the controller 24, so that a logic operation should be performed through the OR gate 36 and the AND gate 37, and that the RAM pulse generator 28 should output a read pulse. On the other hand, if the RAM circuit 26 is performing a writing operation, the read output terminal Pφ of the controller 24 outputs a low signal, so that a logic operation should be performed through the OR gate 36 and the AND gate 37, and that a $\overline{w}$ signal should be supplied from the controller 24 to the RAM pulse generator 28, thereby generating a write pulse.

The block counter 29 is driven by the clock pulse of the clock generating means 16, and reads the control data of the controller 24 to transmit them to the TPH 13. When doing this, a pulse is generated upon completing each of lines, and a gradation termination signal is inputted into the controler 24, while a latch signal is supplied to the TPH 13 in order to perform a TPH control.

A gradation counter section 29 continuously outputs the output of the block counter 29, and then, outputs data to show the current gradation. Then the gradation counter 30 supplies a gradation termination signal to the controller 24, and then, supplies a strobe signal to the TPH 13 by utilizing the logic operation of a NOR gate 34, before being cleared for itself. That is, when one gradation data is wholly transmitted or when $2^m$ gradation data are completely transmitted, the block counter section 29 is cleared through the OR gate 35. When $2^m$ gradation data are completely transmitted, the gradation counter 30 is cleared, and supplies a signal informing the completion of the transmission of $2^m$ gradations and 1 gradation to the controller 24.

Under this condition, the A/D converter 23 decodes the temperature detection signals based on the inputted signals, and the controller 24 supplies a proper heat release time control value to the heat release time control buffer 25 in accordance with the decoded value of the digital signals. The first comparator 31 compares the output signals of the gradation counter 30 with the image source data of one line consisting of a plurality of pixels and corresponding to the decoded value of the A/D converter 23. Only if the compared result meets a certain preset condition (A1 ≧ B1), a high signal is outputted. The second comparator 32 compares the heat releas time control data of the heat release time control buffer 25 with the value of the gradation counter 30, and, only if a certain condition (A2 ≧ B2) is met by the compared result, a high signal is outputted. Under this condition, only when the outputs of the first and second comparators 31,32 are all high, the AND gate 33 supplies a TPH heat releasing signal, so that the TPH 13 should release heat during a certain gradation period.

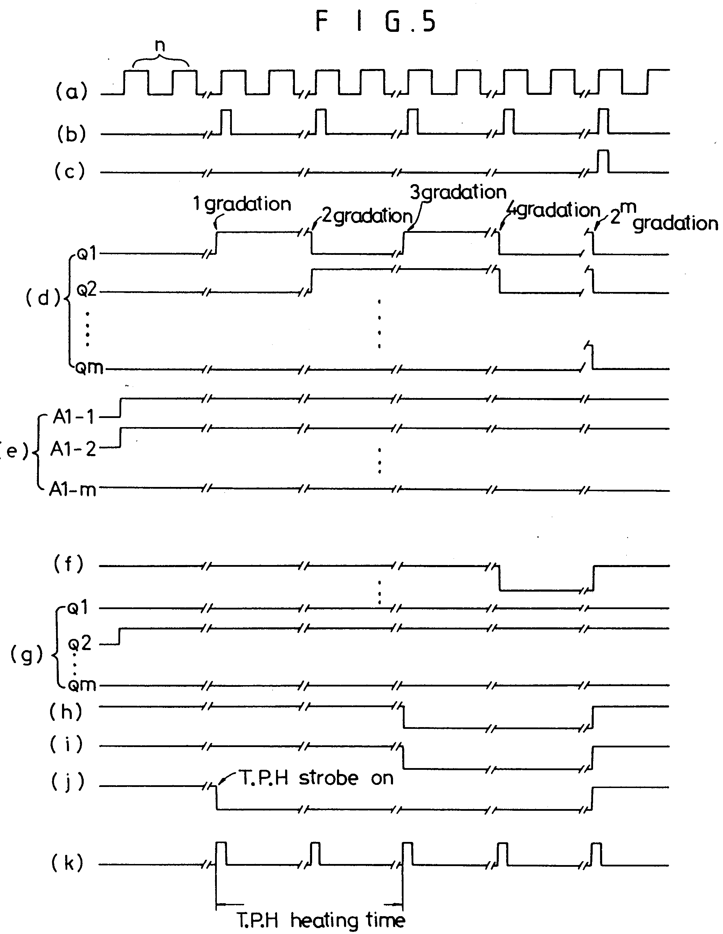

Accordingly, by starting or stopping the heat release of the TPH as shown in Figure 4 in a proper manner, an output which approaches close to an ideal heat releasing graph can be outputted. In the graph of Figure 4, the temperature detection signal detected at the first gradation shows an overheating status, and therefore, the heat release is halted during the interval between the first gradation and the second gradation. However, the temperature detection signal detected at the second gradation shows a non-overheating status, and therefore, the heat release is conducted during the interval between the second and third gradations. Further, the temperature detection signal detected at the third gradation shows a non-overheating status, and therefore, a heat release from the TPH is conducted during the interval between the third and fourth gradations.

The case,in which the TPH 13 is let to release heat during the time up to the second gradation, and in which the TPH 13 is is not let to release heat during the time from the third gradation to the $2^m$th gradation, will be described in further detail referring to Figure 4 and the timing chart of Figure 5. The image data which are inputted from the RAM circuit 26 to the input terminal A1 of the first comparaing means 31 in accordance with the graph of Figure 4 will be assumed to consist of a binary number "11" in all the gradations (refer to Figure 5e). Further, the heat release is conducted up to the second gradation, and the heat release time control data which are inputted from the controller 24 through the heat release time control buffer 25 to the input terminal A2 of the second comparing means 31 will be assumed to consist of a binary number "10" in all the gradations as shown in Figure 5g.

Under the condition as assumed above, the controller 24 decodes and records on the RAM circuit 26 the first line of the image data consisting of a plurality of pixels, and inputs the first line into the input terminal A1 of the first comparing means 31. Under this condition, the controller 24 recognizes the completion of each line and the completion of the total $2^m$ gradations, and then, reads the output of the A/D converter 23 each time the completion of one line is informed by the block counter 29. Then the controller 24 compares the read data with the image source reference value stored in the RAM circuit 26, and then, sends a heat release control value to the heat release time control buffer 25. Then the image data of the RAM circuit 26 is supplied to the input terminal A1 of the first comparator 31 in the form of a binary number "11" by the help of the function of the clock generating means 16 which is driven by the driving signals of the controller 24. (Refer to Figure 5e). Then the heat release time control buffer 25 which stores the heat release judgment value for the current gradation supplies a binary number "10" to the input terminal A2 of the second comparator 32 (refer to Figure 5g).

Under this condition, the block counter 29 is driven by the clock generating means 16, and, if pulses are transmitted as much as the number n of the total elements as shown in Figure 5a, then the output of the block counter 29 is transmitted to the gradation counter as shown in Figure 5b, while latch signals are supplied to the TPH 13 at the same time in order to control the TPH as shown in Figure 5k.

When the signals which are supplied to the gradation counter 30 amount to $2^m$, then the completion of $2^m$ gradations is notified, and the gradation counter 30 is outputted in order to notify the range from Q1 to Qm, while the output of the gradation counter 30 is transmitted to the first and second comparators 31,32 as shown in Figure 5d.

Under this condition, as was already described above, the binary data which is inputted into the input terminal A1 of the first comparator 31 is "11", while the binary data which is inputted into the input terminal A2 of the second comparator 32 is "10". Therefore, the output of the first comparator 31 is maintained in a high level until the third gradation is counted as shown in Figure 5f, while the output is shifted to a low level starting from the fourth gradation.

The output of the second comparator 32 is maintained in a high level until the second gradation is counted as shown in Figure 5h, while it is shifted to a low level starting from the third gradation. Thus the output of the AND gate 33 is maintained in a high level up to the first and second gradations, while it is shifted to a low level from the third gradation to the $2^m$th gradation.

The output of the AND gate 33 is supplied to the TPH 13 only when it is a high level, while the output of the gradation counter 30 is maintained in an active low from the first to $2^m$th gradations by supplying strobe signals through the NAND gate as shown in Figure 5j. Therefore, the heat release is conducted up to the second gradation, while the heat release is stopped from the third gradation to the $2^m$th gradation.

The apparatus of the present invention operated in the above described manner brings the following effects.

First, the overheating phenomenon which occurs during a printing is detected for each line, and the temperature compensation is carried out for each line.

Therefore, the optical concentration which is very sensitive to heat can be more effectively controlled, thereby obtaining a clearer and more uniform picture quality.

Second, the hardware is constituted in a simpler form, the transmitting speed is increased, and the formation of the control logic circuit is rendered easier.

## Claims

1. Temperature control apparatus for a thermal print head (13) of a colour printer;
   characterized by:
   a temperature detector (21) to detect the temperature of a thermal print head and to provide a signal representative thereof; and
   control means (14-18) operable to control heat release by said head (13) in response to the temperature detection signal and a flow of image data to be printed by said head, said heat release control being effected to allow heat release if the detected temperature is below a predetermined value and to discontinue heat release for a time period if the detected temperature is above a predetermined value.

2. Temperature control apparatus for a thermal print head (13) of a colour printer;
   characterized by:
   a temperature detector (21) to detect the temperature of a thermal print head and to provide a signal representative thereof;
   control means (14) for controlling image data signals to be printed by said head and for controlling signals representing a heat release time period, in response to the temperature detection signals;
   a pulse generator (16) for generating signals to regulate the transmission of said image data signals and a printing operation by said head in accordance with control signals supplied by said control means (14);
   a memory (15) for transmitting said image data to said head in accordance with said pulse generator signals after the image data has been entered into said memory from said control means (14);
   print head control means (17) for supplying a current gradation value of the printing into said control means (14) in accordance with said pulse generator signals, and for generating temperature control signals in accordance with said pulse generator signals; and
   print head heat release means (18) for supplying heat release control signals to said head in response to a comparison of said image data signals and said heat release time period signals with said temperature control signals.

3. Apparatus according to claim 2 characterized in that said control means (14) comprises an amplifier (22) to amplify the temperature detection signals, a converter (23) to convert the amplified signal to a digital signal, and a control section (24) to generate control signals to cause provision of the image data signals and the heat release time period signals to said thermal print head in response to said digital signal.

4. Apparatus according to claim 2 or claim 3 characterized in that said memory (15) comprises a memory section (26) for storing the image data signals in accordance with control signals from said control means (14), an address counter (27) for sequentially supplying the addresses of said memory section, and a signal generator (28) for generating signals to drive said address counter and to select read or write for said memory section.

5. Apparatus according to any one of claims 2 to 4 characterized in that said print head control means (17) comprises a block counter (29) for supplying a control signal upon completion of each line of printing by said head in accordance with said pulse generator signals in order to cause transmission of respective gradation completion signals to said control means (14) and to said print head (13) simultaneously; and a gradation counter (30) for supplying a completion signal for all the gradations by counting the outputs from said block counter (29), and for supplying the control signals to said print head.

6. Apparatus according to any one of claims 2 to 5 characterized in that said print head heat release means (18) comprises a buffer (25) for memorising the heat release time period signals, a first comparator (31) for comparing the heat release time period signals with the temperature control signals, and a second comparator (32) for comparing the image source data signals from said memory (15) with the temperature control signals.

7. Apparatus according to any one of claims 2 to 6 characterized in that said temperature detector (21) comprises a thermistor and a resistor to provide a temperature detection signal in the form of a voltage signal.

8. A method of controlling the temperature of a thermal print head (13) of a colour printer; characterized by:
   detecting the temperature of the print head and providing a signal representative thereof;
   storing image data signals to be printed by the head and heat release time period signals;
   generating temperature control signals in accordance with the temperature detection signals;
   comparing the stored image data signals and heat release time period signals with said temperature control signals; and
   controlling the heat release of said print head in accordance with said comparisons.

9. A method according to claim 8 characterized in that said temperature detection is carried out in respect of each image line printed by said head.

# F I G. 1 (PRIOR ART)

| Buffer section | First memo-ry section | Second me-mory section | Third memo-ry section |

5

Second cpu section

ROM Circuit — 9

Digital signal processing sec-tion — 3

Gate array section

8

TPH section

1

CPU section

2

11  4  6  10  a  b  c  7

# F I G. 2

Control means — 14

Memory means — 15

17

TPH control means

TPH heat releasing means

18

TPH

13

Clock pul-se genera-ting means — 16

F I G. 3

# F I G. 4

Heating temperature

Overheated case

Temperature controlled case

Ideal case

Gradation number

# F I G . 5

(a)

(b)

(c)

1 gradation    2 gradation    3 gradation    4 gradation    $2^m$ gradation

(d) { Q1
      Q2
      ⋮
      Qm

(e) { A1-1
      A1-2
      A1-m

(f)

(g) { Q1
      Q2
      ⋮
      Qm

(h)

(i)

(j)    T.P.H strobe on

(k)

T.P.H heating time